# EUROPÄISCHE PATENTSCHRIFT

(11) **EP 2 402 067 B1**
(45) Veröffentlichungstag und Bekanntmachung des Hinweises auf die Patenterteilung: **21.10.2015**
(21) Anmeldenummer: 11157327.5
(22) Anmeldetag: 08.03.2011
(51) Int. Cl.: B01D 39/06, C02F 1/28, C02F 3/04

(54) **Verwendung eines Filtermaterials aus Sand spezifischer Körngrössenverteilung in einem Filter mit einer Mächtigkeit < 30 cm**
Use of a filter material of sand comprising specific particle size distribution in a filter having a thickness < 30 cm
Usage d'un materiau de filtre comprenant du sable avec une distribution spécifique des tailles de grains dans un filtre ayant une épaisseur < 30 cm

(30) Priorität: 29.06.2010 DE 202010007934 U
(43) Veröffentlichungstag der Anmeldung: 04.01.2012
(73) Patentinhaber: Hauraton GmbH & Co. KG, 76437 Rastatt (DE)
(72) Erfinder: Huwe, Claus, 76131 Karlsruhe (DE)
(74) Vertreter: Geitz Truckenmüller Lucht

(56) Entgegenhaltungen:
- WO-A2-2009/028893
- DE-A1- 10 010 109
- DE-U1- 9 422 101
- JP-A- 2004 033 993
- JP-A- 2009 011 883

## Beschreibung

Die vorliegende Erfindung betrifft die Verwendung eines Filtermaterials zur Behandlung von Oberflächenwasser, wobei das Filtermaterial einen in mehrere Kornfraktionen zerlegten und wieder zusammengemischten Brechsand mit Fraktionen unterschiedlicher Korngrößen derart umfasst, dass der Brechsand eine überwiegende Mittelsandfraktion enthält und eine zumindest näherungsweise gleich große Fein- wie Grobsandfraktion aufweist, wobei eine Ton- und Schlufffraktion sowie eine Feinkiesfraktion zumindest näherungsweise nicht enthalten sind.

Ein derartiges Filtermaterial ist bereits aus der deutschen Offenlegungsschrift DE 100 10 109 A1 bekannt. Dort ist ein Filtersubstrat der genannten Art beschrieben, welches für große Filter geeignet ist und bei Filtermächtigkeiten über 0,75 Metern eingesetzt wird.

Ein weiteres Filtermaterial ist aus der Gebrauchsmusterschrift DE 20 2007 008 765 U1 vorbekannt. Das dort beschriebene Filtermaterial besteht im Wesentlichen aus Kalksteinsand, vorzugsweise Kalksteinbrechsand, welcher als Material ein sehr hohes stoffliches Leistungsvermögen mit guten hydraulischen Eigenschaften verbindet. Derartige Filtermaterialien werden beispielsweise im Bereich der Straßenentwässerung eingesetzt, um das von den Verkehrswegen ablaufende Abwasser vor einem Versickern oder einem Ablaufen in die Kanalisation vorzufiltern und damit zumindest teilweise von dem im Straßenabwasser gebundenen Schmutz zu reinigen.

Gemäß DWA-A 138, einem Arbeitsblatt der Vereinigung für Wasserwirtschaft, Abwasser und Abfall e. V., liegt ein Großteil der Schadstofffracht im Straßenabfluss an Feinstpartikel gebunden und nur ein kleinerer Teil gelöst im Niederschlagsabfluss vor. Bei aktuellen Messungen der Konzentrationen im Abfluss von stark befahrenen Autobahnen ermittelten LANGE et al. im Jahre 2001 partikulär gebundene Anteile an der Gesamtkonzentration von über 90 % und für die Schwermetalle Blei, Kupfer und Zink 68 % bis 89 %

Rinnen zum Auffangen von Oberflächenwasser mit Filtermaterialien sind aus DE20012282U bekannt. WO2009028893 offenbart eine Abflussrinne mit mehreren aufeinanderfolgenden Filterschichten aus Kies, Sand und Zeolith.

Versuche zum Fest- und Schadstoffrückhalt von Verkehrsflächenabflüssen durch Filtersubstrate in dafür entwickelten Filtersubstratrinnen zeigten, dass bei bestimmten Filtersubstraten aus Brechsand ein Austrag an Feinstpartikeln kleiner als 0,063 mm des Filtersubstrats selbst, aber auch des zu filternden Verkehrsflächenabflusses stattfinden kann. Der hierbei als Filtersubstrat verwendete Brechsand der Körnung 0-2 mm wurde herstellerseitig zur Verbesserung der Filterleistung um Partikel größer als 2 mm, sowie zur Gewährleistung einer Mindestdurchlässigkeit um Partikel kleiner als 0,063 mm reduziert. Das Filtersubstrat wies eine stark asymmetrische Körnungslinie auf, so dass einem hohen Grobsandanteil nur geringe Fein- und Mittelsandanteile gegenüber standen.

Die asymmetrische Körnungslinie liegt, neben der Mahlbarkeit des Mahlgutes sowie seiner chemisch-mineralogischen Zusammensetzung, hauptsächlich im Aufbereitungsverfahren begründet. So werden z.B. Kalksteinbrechsande mithilfe von Hochgeschwindigkeitsprallmühlen und Trennapparaten wie Sieben und Windsichten derart zerkleinert und aufbereitet, dass einerseits die einzelnen Teilchen bevorzugt in kubischer Form vorliegen und außerdem das Kornband - von einer technisch bedingten Unschärfe des Prozesses abgesehen - nach oben und unten begrenzt werden kann.

Moderne Aufbereitungsanlagen können im Umlauf gefahren werden, d.h. dass Teilchen oberhalb einer gewünschten Siebmaschenweite ohne weiteres wieder zur Zerkleinerungsmaschine zurückgeführt und erneut zerkleinert werden können. So können bei hohen Umlaufzahlen sehr feine Körnungslinien mit einem viel zu hohen Feinsandanteil und verhältnismäßig geringen Mittel- und Grobanteilen erreicht werden und umgekehrt bei niedrigen Umlaufzahlen entsprechend gröbere Körnungslinien. Die technisch hergestellten Körnungslinien sind dabei stets asymmetrisch, und kennzeichnen sich dadurch, dass der technisch wertvolle Mittelsandbereich (z.B. zwischen 0,6 mm und 1,2 mm) als Mangelfraktion vorliegt. Trotz Optimierungsmaßnahmen an Maschinen und Verfahrenstechnik kann die Ausbeute im Mittelkornbereich zwar mehr oder weniger verbessert werden; jedoch bleibt die Asymmetrie bestehen. Eingeschränkt werden die Optimierungsversuche durch den entstehenden Feinstanteil < 0,063 mm. Diese sehr feinen Teilchen sind in der Regel technisch nicht nutzbar und müssen entweder verworfen werden oder sie werden durch Zugabe in andere Prozesse oder Produkte, in sehr kleinen Mengen, verschnitten. Das Erzeugen von großen Feinstanteilen ist daher im Allgemeinen unwirtschaftlich.

Symmetrische Kornverteilungen können bis heute nicht durch einen kontinuierlichen Prozess ohne Verwerfen unerwünschter Überflussfraktionen erreicht werden. Dies ist nur synthetisch, z.B. durch gezieltes Zusammenmischen von zuvor hergestellten Kornfraktionen oder verschiedenen Sanden und/oder Kalksteinbrechsanden in bestimmten Massenverhältnissen möglich.

Die erzeugte Körnungslinie hat einen deutlichen Einfluss auf die Filterleistung und auf die Filterstabilität. Bei überproportional hohem Feinanteil sinkt die Filterdurchlässigkeit und damit die hydraulische Leistung. Bei überproportional hohem Grobanteil werden durch die höhere Fließgeschwindigkeit des Abwassers sowohl kleinere Schmutzpartikel als auch feinkörnige Teile des Filtermaterials ausgeschwemmt. Die Filterstabilität und somit auch der Filterwirkungsgrad verschlechtert sich erheblich. Dieser Effekt ist vor allem bei geringer Filtermächtigkeit, etwa kleiner als 30 cm, zu beobachten. Begünstigt wird das Ausschwemmen der Feinanteile im Winterbetrieb der Filteranlage, wo aufgrund der Frost- und Tauwechsel das Filtermaterial insgesamt aufgelockert wird und damit die Durchlässigkeit temporär zunehmen kann.

Vor diesem Hintergrund liegt der vorliegenden Erfindung die Aufgabe zu Grunde, ein Filtermaterial zu finden, welches auch bei kleineren Filtermächtigkeiten, insbesondere unter 30 cm, stabil ist und eine hohe Filterqualität ermöglicht. Gelöst wird diese Aufgabe durch die Verwendung eines Filtermaterials gemäß den Merkmalen des Anspruchs 1. Weitere sinnvolle Ausgestaltungen eines derartigen Filtermaterials bzw. von dessen Verwendung können den Unteransprüchen entnommen werden.

Erfindungsgemäß ist vorgesehen, dass ein Filtermaterial zur Verwendung in einem Filter mit einer Mächtigkeit von weniger als 30 cm, vorzugsweise sogar einer Mächtigkeit zwischen 10 und 20 cm, eine symmetrische Körnungslinie aufweist. Dies bedeutet, dass in etwa gleiche Massenanteile der Feinsandfraktionen und der Grobsandfraktionen enthalten sind, sowie ein überwiegender Anteil einer Mittelsandfraktion. Die Kornsandfraktion entspricht hierbei der DIN-EN-ISO 14688-1 bzw. der von dieser abgelösten DIN 4022-1 und bezieht sich auf die Größe der Partikel, also Feststoffkörpern in Böden, Filtersubstraten, Sedimenten und Feststofffrachten von Oberflächenabflüssen. Die nachfolgend wiedergegebene Tabelle zeigt die Kategorisierung der verschiedenen Korngrößen gemäß den oben genannten Normen.

| **Bereich** (DIN EN ISO 14688-1) | **Benennung** (DIN EN ISO 14688-1) | **Kurzzeichen** (DIN EN ISO 14688-1) | **Kurzzeichen** (DIN 4022-1) | **Korngrößenbereich** [mm] | **manuelle Bestimmung** |
|---|---|---|---|---|---|
| sehr grobkörniger Boden | großer Block | LBo | [-] | > 630 | |
| | Block | Bo | Y | > 200 - 630 | Kopfgröße |
| | Stein | Co | X | > 63 - 200 | größer als Hühnereier |
| grobkörniger Boden | Kies | Gr | G | > 2 - 63 | Hühnerei Haselnuss Erbse Streichholzkopf Grieß |
| | Grobkies | CGr | gG | > 20 - 63 | |
| | Mittelkies | MGr | mG | > 6,3 - 20 | |
| | Feinkies | FGr | fG | > 2,0 - 6,3 | |
| | Sand | Sa | S | > 0,063 - 2,0 | |
| | Grobsand | CSa | gS | > 0,63 - 2,0 | |
| | Mittelsand | MSa | mS | > 0,2 - 0,63 | |
| | Feinsand | FSa | fS | > 0,063 - 0,2 | |
| feinkörniger Boden | | | | | **gering plastisch 1)** *trocken:* gut zu Staub zerdrückbar; *feucht*: mehlig, stumpf, bröckelt; *im Wasser:* wird leicht zu Brei, starke Trübung des Wassers; |
| | Schluff | Si | U | > 0,002 - 0,063 | |
| | Grobschluff | CSi | gU | > 0,02 - 0,063 | |
| | Mittelschluff | MSi | mU | > 0,0063 - 0,02 | |
| | Feinschluff | FSi | fU | > 0,002 - 0,0063 | |
| | | | | | |
| | Ton | Cl | T | < 0,002 | **ausgeprägt plastisch** |
| | | | | | *trocken:* nur zu zerbrechen; feucht: seifig, glänzig, knetbar, vom Finger nur abzuwaschen; *im Wasser:* schwer aufzuweichen, geringe Trübung des Wassers; |

Im Gegensatz zu den im Stand der Technik bekannten asymmetrischen Körnungslinien, welche überwiegend aus Grobsand bestehen, bildet bei einer derartigen symmetrischen Körnungslinie die Mittelsandfraktion eine solide Basis, welche einerseits genügend grobkörnig ist, um die erforderliche Durchlässigkeit zu erhalten, andererseits jedoch auch genügend fein ist, um die Feinsandfraktion zu halten und das Filtermaterial vor einem Austrag derselben zu schützen. Durch das Festhalten der Feinsandfraktion wird zudem gewährleistet, dass auf Dauer auch eine Filterung kleinerer Schmutzpartikel mit dem Filtermaterial möglich ist.

Bei dem Filtermaterial kann es sich in einer Ausgestaltungsform um einen künstlich gebrochenen Brechsand handeln, welcher vorzugsweise in kubischer Form eingesetzt wird. Ein derartiger, vorteilhafter Weise in kubischer Form vorliegender Brech- bzw. Edelbrechsand wird beispielsweise durch Zerkleinerung karbonatreichen Gesteins in einer Hochgeschwindigkeitsprallmühle hergestellt, wobei aus dem so entstehenden Material mit asymmetrischer Körnungslinie durch Hinzufügen von Feinsand und insbesondere Mittelsand ein Material mit symmetrischer Körnungslinie entsteht. Bevorzugtermaßen kann es sich bei dem Brechsand um Kalksteinbrechsand handeln.

Alternativ kann das Filtermaterial aus natürlichen, fluviatilen Sedimenten, oder aus Flusssanden gewonnen werden, oder aus einer Mischung dieser beiden Materialien entstehen.

In einer weiteren Alternative kann das Filtermaterial aus einem Brechsand hergestellt werden, der zuvor in mehrere Kornfraktionen zerlegt wurde und danach entsprechend der idealen Zusammensetzung der Komponenten zusammengemischt wurde.

Die Zusammensetzung des erfindungsgemäßen Filtermaterials reicht im Bereich der oben stehenden Tabelle von einer Ton- und Schlufffraktion bis hin zu einer Feinkiesfraktion.

Hierbei ist vorgesehen, dass diese beiden Fraktionen jeweils zwischen null und fünf Gewichtsprozent des gesamten Filtermaterials ausmachen, während Feinsandfraktion und Grobsandfraktion jeweils zwischen 15 und 30 Gewichtsprozente aufweisen. Eine Mittelsandfraktion von 45 bis 60 Gewichtsprozent bildet den Hauptteil dieses Filtermaterials. Die Eigenschaften und damit der praktische Nutzen des symmetrisch aufgebauten Filtermaterials haben dabei, unabhängig vom Prüfverfahren zur Ermittlung der Körnungslinie, Bestand. So kann die Korngrößenverteilung z.B. mithilfe von Taumelsiebmaschinen, Luftstrahlsieben, Lasergranulometern oder durch andere Prüfverfahren ermittelt werden. Die Zusammensetzung des erfindungsgemäßen Filtermaterials gilt auch bei Verwendung bzw. beim Zusammenführen von vier, fünf oder noch mehr Kornfraktionen, sofern beim anschließenden Klassieren - gemäß Tabelle 1 in drei Kornklassen (fein, mittel und grob) - die Symmetrie nachweisbar ist.

Die bevorzugte Ausgestaltung des Filtermaterials sieht vor, dass die Ton- und Schlufffraktion sowie die Feinkiesfraktion zu null Gewichtsprozent vertreten sind, während Feinsandfraktion und Grobsandfraktion jeweils 20 Gewichtsprozent ausmachen. In der bevorzugten Ausführung verbleiben demnach für die Mittelsandfraktion 60 Gewichtsprozent.

Insoweit wird angestrebt, eine maximale Korngröße von weniger als 4 mm, vorzugsweise sogar von weniger als 2 mm zu erreichen, Letzteres wenn ein Anteil von 0 % bei der Feinkiesfraktion erreicht wird.

Ein derartiges Filtermaterial kann vorteilhafter Weise zur Einleitung und/oder zur Durchleitung von Oberflächenwasser in einem Filter aufgenommen sein, so beispielsweise in einer Filtersubstratrinne, in welche das Oberflächenwasser beispielsweise von entwässerten Straßen, durchaus aber auch von entwässerten Dächern und anderen Abwasser führenden Flächen einlaufen kann. Ein derartiges Filter weist hierbei im Zusammenhang mit der Erfindung idealerweise eine Mächtigkeit von weniger als 30 cm, vorzugsweise eine Mächtigkeit zwischen 10 und 20 cm auf.

Die vorstehend beschriebene Erfindung wird im Folgenden anhand eines Ausführungsbeispiels näher erläutert.

Es zeigen:
- Figur 1: eine asymmetrische Körnungslinie, wie sie bei Filtermaterialien gemäß dem Stand der Technik bekannt ist in einem einfach logarithmisch geteilten Diagramm, sowie
- Figur 2: eine symmetrische Körnungslinie gemäß der Erfindung, ebenfalls in einem einfach logarithmisch geteilten Diagramm.

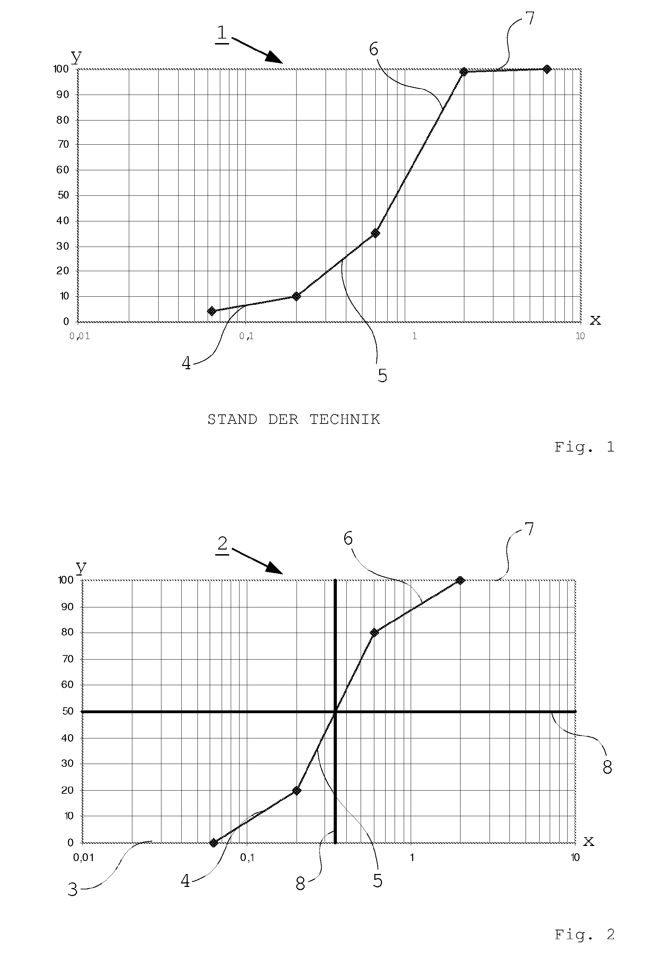

Figur 1 zeigt die Körnungslinie herkömmlicher Filtermaterialien, insbesondere bestehend aus Kalksteinbrechsand. Eine derartige Körnungslinie weist einen geringen Anteil von etwa 5 Gew.-% der Ton- und Schlufffraktion auf, sowie einen ebenfalls geringen Prozentsatz von etwa 5 Gew.-% einer Feinsandfraktion 4. Weitere 25 Gew.-% des Filtermaterials gehören der Mittelsandfraktion 5 an, während der Großteil von annähernd 65 Gew.-% zur Grobsandfraktion 6 gehört. Auch ein kleiner Anteil von ca. 2 Gew.-% der Feinkiesfraktion 7 ist in dem hier gezeigten Filtermaterial vorhanden.

Wie leicht zu erkennen ist, handelt es sich bei der so entstehenden Körnungslinie um eine asymmetrische Körnungslinie 1, bei welcher die Grobsandfraktion 6 stark überwiegt. Dies hat zur Folge, dass die Feinsandfraktion 4, welche deutlich feinkörniger ist, in dem überwiegend vorhandenen Grobsand keinen Halt findet und daher mit dem eingeschwemmten Oberflächenwasser aus dem Filtermaterial ausgeschwemmt wird, so dass sich mit der Zeit die Asymmetrie der asymmetrischen Körnungslinie 1 noch weiter in Richtung der Grobsandfraktion 6 verschiebt. In diesem Fall werden kleinere Schmutzpartikel innerhalb des eingetragenen Abwassers von dem zunehmend weniger vorhandenen Feinsand innerhalb des Filtermaterials immer weniger festgehalten, so dass das Filtermaterial hierdurch in diesem Bereich seine Wirkung verliert.

Figur 2 zeigt dem entgegen eine symmetrische Körnungslinie 2, wie von dem Filtermaterial gemäß der Erfindung realisiert. Wesentlicher Bestandteil ist hierbei die Mittelsandfraktion 5, welche 60 % des Gesamtgewichts des Filtermaterials ausmacht. In gleichen Teilen zu jeweils 20 Gew.-% sind die Feindsandfraktion und die Grobsandfraktion 4 bzw. 6 vertreten. Durch eine Einblendung zweier Symmetrieachsen 8 wird die Punktsymmetrie dieser symmetrischen Körnungslinie 2 an dem Schnittpunkt der Symmetrieachsen 8 deutlich. Eine Ton- und Schlufffraktion 3 sowie eine Feinkiesfraktion 7 sind in diesem Filtermaterial nicht enthalten.

Aufgrund des überwiegend vorhandenen Mittelsandes, welcher bei der Herstellung des vorliegenden Filtermaterials durch Hinzufügen von Anteilen der Mittelsandfraktion 5 zu einem durch die bekannten Herstellungsmethoden produzierten Brechsand mit asymmetrischer Körnungslinie 1 diesem ebenso wie ein Anteil der Feinsandfraktion 4 hinzugefügt wird, wird das Filtermaterial insbesondere bei der Verwendung in Filtern mit Mächtigkeiten kleiner als 30 cm deutlich stabiler. Dies rührt daher, dass einerseits der Mittelsand als überwiegend vorhandenes Material eine gleichzeitig gute Durchflutung ermöglicht, während er andererseits den Feinsand in der Mischung des Filtermaterials festhält.

Vorstehend beschrieben ist somit ein Filtermaterial zur Verwendung in Filtern insbesondere geringer Filtermächtigkeit, welches gleichzeitig gute Absorptionseigenschaften aufweist und über die Dauer des Einsatzes auch bei geringen Filtermächtigkeiten stabil bleibt. Dies wird durch das Anstreben einer symmetrischen Körnungslinie realisiert, welche einen überwiegenden Anteil an Mittelsand innerhalb des Filtermaterials bedeutet, was ein Austragen der Feinsandfraktion aus dem Filtermaterial verhindert.

## Patentansprüche

1. Verwendung eines Filtermaterials zur Behandlung von Oberflächenwasser, wobei das Filtermaterial eine in einem einfach logarithmisch geteilten Diagramm symmetrische Körnungslinie aufweist, nämlich einen in mehrere Kornfraktionen zerlegten und wieder zusammengemischten Brechsand mit Fraktionen unterschiedlicher Korngrößen derart umfasst, dass der Brechsand eine Mittelsandfraktion einer Korngröße > 0,2 - 0,63 mm von 45 bis 60 Gew.-% enthält und eine Feinsandfraktion einer Korngröße > 0,063 - 0,2 mm sowie eine Grobsandfraktion einer Korngröße > 0,63 - 2,0 mm von jeweils 15 bis 30 Gew.-% aufweist, wobei eine Tonfraktion einer Korngröße < 0,002 mm und eine Schlufffraktion einer Korngröße > 0,002 - 0,063 mm von zusammen 0 bis 5 Gew.-% sowie eine Feinkiesfraktion einer Korngröße > 2,0 - 6,3 mm von 0 bis 5 Gew.-% enthalten sind, wobei die Verwendung in einem Filter mit einer Mächtigkeit von weniger als 30 cm erfolgt.

2. Verwendung eines Filtermaterials gemäß Anspruch 1, **dadurch gekennzeichnet, dass** es sich bei dem Brechsand um einen künstlich gebrochenen Brechsand in kubischer Form handelt.

3. Verwendung eines Filtermaterials gemäß Anspruch 2, **dadurch gekennzeichnet, dass** es sich bei dem Brechsand um Kalksteinbrechsand handelt.

4. Verwendung eines Filtermaterials gemäß Anspruch 1, **dadurch gekennzeichnet, dass** der Sand aus natürlichen, fluviatilen Sedimenten und/oder aus Flusssanden gewonnen ist und dem natürlichen, fluviatilen Sand bzw. den Flusssanden zur Erreichung einer symmetrischen Körnungslinie Brechsande einzelner Körnungen beigemischt sind.

5. Verwendung eines Filtermaterials gemäß einem der vorhergehenden Ansprüche, **dadurch gekennzeichnet, dass** dem Brechsand zur Erreichung einer symmetrischen Körnungslinie fluviatile Sedimente oder Flusssande beigemischt sind.

6. Verwendung eines Filtermaterials gemäß einem der vorhergehenden Ansprüche, mit einer maximalen Korngröße von weniger als 4 mm.

## Claims

1. The use of a filter material for treating surface water, wherein the filter material has a grading curve which is symmetric in a simple logarithmically divided diagram, namely crusher dust with fractions of different grain sizes which is divided into several grain fractions and mixed together again in such a way that the crusher dust comprises a medium sand fraction of a grain size > 0.2 - 0.63 mm of 45 to 60% by weight and a fine sand fraction of a grain size > 0.063 - 0.2 mm and a coarse sand fraction of a grain size > 0.63 - 2.00 mm of 15 to 30% by weight respectively, wherein a clay fraction of a grain size < 0.002 mm and a silt fraction of a grain size > 0.002 - 0.063 mm of together 0 to 5% by weight and a fine gravel fraction of a grain size > 2.0 - 6.3 mm of 0 to 5% by weight are contained, wherein the use occurs in a filter with a thickness of less than 30 cm.

2. The use of a filter material according to claim 1, **characterized in that** the crusher sand concerns artificially crushed crusher sand in cubic form.

3. The use of a filter material according to claim 2, **characterized in that** the crusher sand concerns crushed limestone sand.

4. The use of a filter material according to claim 1, **characterized in that** the sand is obtained from natural, fluvatile sediments and/or river sand, and crusher sands of individual grain sizes are mixed to the natural, fluvatile sand and/or the river sands for achieving a symmetric grading curve.

5. The use of a filter material according to one of the preceding claims, **characterized in that** fluvatile sediments or river sands are mixed into the crusher sand for achieving a symmetric grading curve.

6. The use of a filter material according to one of the preceding claims, having a maximum grain size of less than 4 mm.

## Revendications

1. Utilisation d'un matériau filtrant pour le traitement d'eaux de surfaces, dans lequel le matériau filtrant présente une courbe de granulométrie symétrique dans un diagramme partagé de façon logarithmique simple, c'est-à-dire contient du sable concassé séparé en plusieurs fractions granulométriques puis mélangé à nouveau et comportant des fractions de différentes grosseurs de grains, de telle sorte que le sable concassé contient une fraction de sable moyen, ayant une grosseur de grains de > 0,2 à 0,63 mm, représentant 45 à 60 % du poids et une fraction de sable fin ayant une grosseur de grains de > 0,063 à 0,2 mm et une fraction de sable gros ayant une grosseur de grains de > 0,63 à 2,0 mm, représentant respectivement 15 à 30 % du poids, avec une fraction argileuse ayant une grosseur de grains de < 0,002 mm et une fraction silteuse ayant une grosseur de grains de > 0,002 à 0,063 mm représentant ensemble entre 0 et 5 % du poids, ainsi qu'une fraction de gravier fin, ayant une grosseur de grains de > 2,0 à 6,3 mm, représentant de 0 à 5 % du poids, laquelle utilisation a lieu dans un filtre ayant une épaisseur inférieure à 30 cm.

2. Utilisation d'un matériau filtrant selon la revendication 1, **caractérisée en ce que** le sable concassé est un sable concassé artificiellement de forme cubique.

3. Utilisation d'un matériau filtrant selon la revendication 2, **caractérisée en ce que** le sable concassé est du sable concassé calcaire.

4. Utilisation d'un matériau filtrant selon la revendication 1, **caractérisée en ce que** le sable est extrait de sédiments fluviaux naturels et/ou de sables de rivière et le sable fluvial naturel ou les sables de rivières sont additionnés de sables concassés de différentes granulométries afin d'obtenir une courbe de granulométrie symétrique.

5. Utilisation d'un matériau filtrant selon l'une des revendications précédentes, **caractérisée en ce que** le sable concassé est additionné de sédiments fluviaux ou de sables de rivière afin d'obtenir une courbe de granulométrie symétrique.

6. Utilisation d'un matériau filtrant selon l'une des revendications précédentes, ayant une grosseur de grains maximale de moins de 4 mm.
